# EUROPEAN PATENT APPLICATION

(11) **EP 4 517 963 A2**
(43) Date of publication of application: **05.03.2025**
(21) Application number: 24190045.5
(22) Date of filing: 22.07.2024
(51) Int. Cl.: H01M 50/209, H01M 50/507

(54) **BATTERY PACK**

(30) Priority: 30.08.2023 JP 2023139531
(71) Applicant: Prime Planet Energy & Solutions, Inc., Chuo-ku Tokyo 103-0022 (JP)
(72) Inventor: INAMURA, Takashi, Tokyo, 103-0022 (JP); KAGEYAMA, Takatoshi, Tokyo, 103-0022 (JP)
(74) Representative: Kuhnen & Wacker Patent- und Rechtsanwaltsbüro PartG mbB

(57) **Abstract**

A first stack (10A) includes a plurality of first battery cells arranged in a first direction. A plate-like first conductive member (400) electrically connects the first stack (10A) and a second stack (10B). A plate-like second conductive member (410) electrically connects a third stack (10C) and an electrical apparatus (50). A case (20) includes a pair of side walls (21) supporting the first stack (10A), the second stack (10B), and the third stack (10C) from both sides in the first direction. The electrical apparatus (50), the first stack (10A), the second stack (10B), and the third stack (10C) are arranged in this order in a second direction orthogonal to the first direction. The first conductive member (400) and the second conductive member (410) overlap each other in a third direction orthogonal to the first direction and the second direction.

## Description

### CROSS REFERENCE TO RELATED APPLICATIONS

This nonprovisional application is based on Japanese Patent Application No. 2023-139531 filed on August 30, 2023 with the Japan Patent Office, the entire contents of which are hereby incorporated by reference.

### BACKGROUND OF THE INVENTION

### Field of the Invention

The present technology relates to a battery pack.

### Description of the Background Art

WO 2021/123714 is a related art document that discloses a configuration of a battery pack. In the configuration of the battery pack disclosed in WO 2021/123714, a plurality of busbars connecting a plurality of battery modules are disposed on an identical plane over the plurality of battery modules.

### SUMMARY OF THE INVENTION

A cell-to-pack structure of a battery pack has started to be employed, where a stack including a plurality of battery cells is stored in a case as it is without using any end plate or bind bar (module structure) for restraining the plurality of battery cells. When the configuration of the busbars included in the battery pack described in WO 2021/123714 is applied to a battery pack employing the cell-to-pack structure, the space inside the battery pack can be used more effectively in order to increase energy density.

The present technology has been devised to solve the above-described problem and is aimed at providing a battery pack employing the cell-to-pack structure, where the space inside the battery pack can be used effectively.

The present technology provides the following battery pack.
[1] A battery pack comprising:
   a first stack including a plurality of first battery cells arranged in a first direction;
   a second stack including a plurality of second battery cells arranged in the first direction;
   a third stack including a plurality of third battery cells arranged in the first direction;
   an electrical apparatus electrically connected to the first stack, the second stack, and the third stack;
   a case accommodating the first stack, the second stack, the third stack, and the electrical apparatus;
   a plate-like first conductive member electrically connecting the first stack and the second stack; and
   a plate-like second conductive member electrically connecting the third stack and the electrical apparatus, wherein
   the case includes a pair of side walls supporting the first stack, the second stack, and the third stack from both sides in the first direction,
   the electrical apparatus, the first stack, the second stack, and the third stack are arranged in this order in a second direction orthogonal to the first direction, and
   the first conductive member and the second conductive member overlap each other in a third direction orthogonal to the first direction and the second direction.
[2] The battery pack according to [1], further comprising
   a busbar module disposed over the first stack, the second stack, and the third stack, wherein
   the busbar module includes a fastening member and a cover member, the fastening member fastening the first conductive member to the first stack and the second stack, the cover member including a cover portion covering at least part of the first conductive member and the fastening member, and
   the second conductive member and the cover portion overlap each other in the third direction.
[3] The battery pack according to [2], wherein
   a gap is present inside the cover portion relative to the at least part of the first conductive member and the fastening member, and
   the cover portion is movable to an extent corresponding to the gap and abuttable on the second conductive member in the third direction.
[4] The battery pack according to [2] or [3], wherein
   the cover member includes a fixing portion capable of fixing the first conductive member and the second conductive member over the busbar module.
[5] The battery pack according to any one of [1] to [4], further comprising:
   a control board disposed, in the third direction, at least over the first stack included in the first stack, the second stack, and the third stack; and
   a board cover portion covering the control board in the third direction, wherein
   the board cover portion supports the second conductive member.
[6] The battery pack according to any one of [1] to [5], wherein
   the first conductive member and the second conductive member each extend in the second direction.

The foregoing and other objects, features, aspects, and advantages of the present invention will become apparent from the following detailed description on the present invention, which will be understood in conjunction with the accompanying drawings.

### BRIEF DESCRIPTION OF THE DRAWINGS

Fig. 1 is a perspective view illustrating a configuration of a battery pack according to Embodiment 1 of the present technology.
Fig. 2 is a perspective view illustrating an internal structure of the battery pack according to Embodiment 1 of the present technology.
Fig. 3 is a perspective view illustrating a configuration of a battery cell according to Embodiment 1 of the present technology.
Fig. 4 is a perspective view illustrating a positional relation between a first conductive member and a second conductive member.
Fig. 5 is a perspective view illustrating a configuration of a cover portion included in a busbar module.
Fig. 6 is a cross sectional view illustrating a configuration around the cover portion in Fig. 5, which is taken along the direction of a line with arrows VI-VI.
Fig. 7 is a perspective view illustrating a state in which a conductive member is fixed by a fixing portion provided on the busbar module.
Fig. 8 is a perspective view illustrating a configuration of a board member included in the battery pack according to Embodiment 1 of the present technology.
Fig. 9 is a cross sectional view illustrating a configuration near the board member in Fig. 8, which is taken along the direction of a line with arrows IX-IX.
Fig. 10 is a perspective view illustrating a configuration of a conductive member included in a battery pack according to Embodiment 2 of the present technology.

### DESCRIPTION OF THE PREFERRED EMBODIMENTS

Embodiments of the present technology are described below. The same or corresponding portions are denoted by the same reference characters, and may not be described repeatedly.

In the embodiments described below, when reference is made to a number, an amount, and the like, the scope of the present technology is not necessarily limited to the number, the amount, and the like unless otherwise stated particularly. Further, in the embodiments described below, each component is not necessarily essential to the present technology unless otherwise stated particularly. Further, the present technology is not limited to one that necessarily exhibits all the functions and effects mentioned in the present embodiments.

In the present specification, the terms "comprise", "include", and "have" are open-end terms. That is, when a certain configuration is included, a configuration other than the foregoing configuration may or may not be included.

Also, in the present specification, when geometric terms and terms representing positional/directional relations are used, for example, when terms such as "parallel", "orthogonal", "obliquely at 45°", "coaxial", and "along" are used, these terms tolerate manufacturing errors or slight fluctuations. In the present specification, when terms representing relative positional relations such as "upper side" and "lower side" are used, each of these terms is used to indicate a relative positional relation in one state, and the relative positional relation may be reversed or turned at any angle in accordance with an installation direction of each mechanism (by reversing the entire mechanism upside down for example).

In the present specification, the term "battery" is not limited to a lithium ion battery but may include other batteries such as a nickel-metal hydride battery and a sodium ion battery. In the present specification, the term "electrode" may collectively represent a positive electrode and a negative electrode.

Further, the "battery pack" according to the present specification can be mounted on vehicles such as a hybrid electric vehicle (HEV), a plug-in hybrid electric vehicle (PHEV), and a battery electric vehicle (BEV). The use of the "battery pack" according to the present specification is not limited to the use in a vehicle.

In the drawings, an X direction as a second direction is the direction in which a plurality of stacks and an electrical apparatus are arranged, a Y direction as a first direction is the direction in which a plurality of battery cells are arranged, and a Z direction as a third direction is the direction in which a first conductive member and a second conductive member are arranged. To facilitate understanding of the present technology, the dimensional ratio of each configuration in the drawings may be changed from the actual dimensional ratio thereof.

### (Embodiment 1)

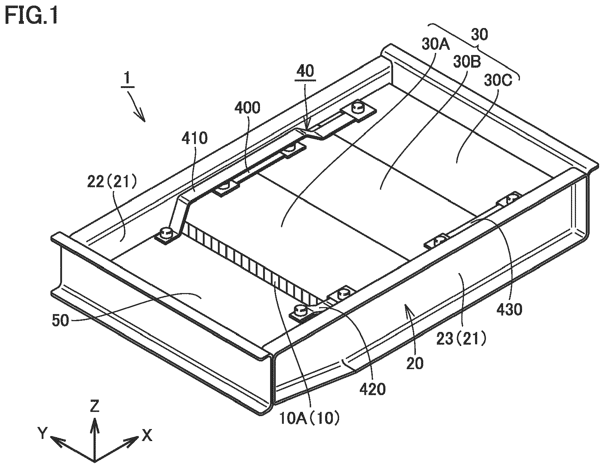

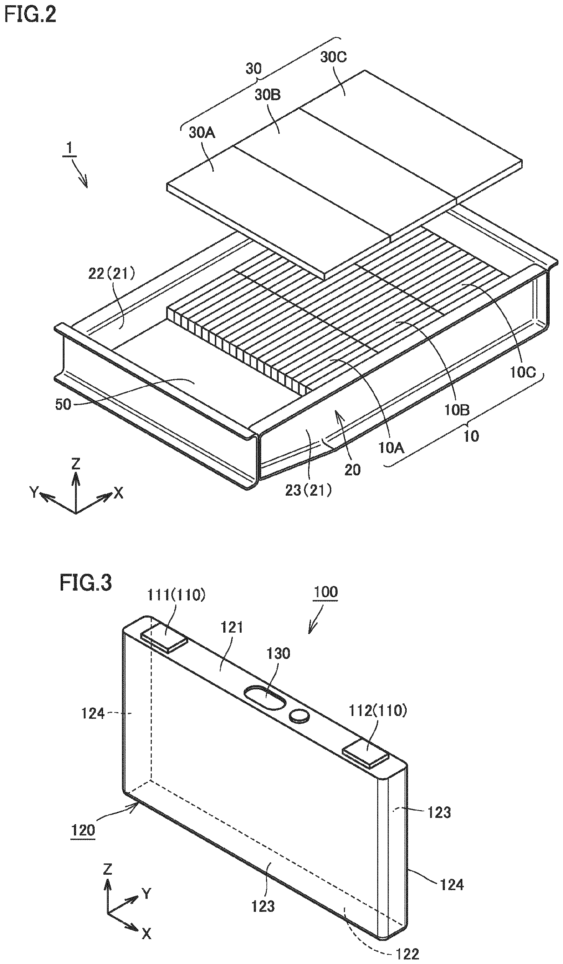

Fig. 1 is a perspective view illustrating a configuration of a battery pack 1 according to Embodiment 1 of the present technology. Fig. 2 is a perspective view illustrating an internal structure of battery pack 1 according to Embodiment 1 of the present technology. In Figs. 1 and 2, a board member 60 is not illustrated, which is described later.

As illustrated in Figs. 1 and 2, battery pack 1 according to the present embodiment includes a stack 10, a case 20, a busbar module 30, a conductive member 40, and an electrical apparatus 50.

Stack 10 includes a first stack 10A, a second stack 10B, and a third stack 10C. First stack 10A includes a plurality of first battery cells arranged in the first direction (the Y direction). Second stack 10B includes a plurality of second battery cells arranged in the first direction (the Y direction). Third stack 10C includes a plurality of third battery cells arranged in the first direction (the Y direction). The first battery cell, the second battery cell, and the third battery cell that are each a battery cell 100 (see Fig. 3) are described in detail later.

Case 20 accommodates first stack 10A, second stack 10B, third stack 10C, and electrical apparatus 50.

Case 20 includes a pair of side walls 21. The pair of side walls 21 include one side wall 22 and the other side wall 23.

The pair of side walls 21 support first stack 10A, second stack 10B, and third stack 10C from both sides in the first direction (the Y direction). In the present embodiment, the one side wall 22 and the other side wall 23 directly support first stack 10A, second stack 10B, and third stack 10C from both sides in the Y direction. Thus, battery pack 1 according to the present embodiment employs a cell-to-pack structure where stack 10 including the plurality of battery cells is stored in case 20 as it is.

Busbar module 30 is disposed over stack 10. Busbar module 30 electrically insulates stack 10 and another component disposed over stack 10. Busbar module 30 electrically connects the plurality of battery cells in stack 10 using inter-cell busbars, which are not illustrated.

Busbar module 30 includes a first busbar module 30A disposed over first stack 10A, a second busbar module 30B disposed over second stack 10B, and a third busbar module 30C disposed over third stack 10C.

Conductive member 40 is provided so as to electrically connect the stacks and electrically connect stack 10 and electrical apparatus 50. Conductive member 40 is made of copper for example.

Conductive member 40 includes a plate-like first conductive member 400, a plate-like second conductive member 410, a plate-like third conductive member 420, and a plate-like fourth conductive member 430.

First conductive member 400 and second conductive member 410 are disposed near the one side wall 22 included in the pair of side walls 21. First conductive member 400 extends in the second direction (the X direction). Second conductive member 410 bends and extends along the second direction (the X direction).

First conductive member 400 electrically connects first stack 10A and second stack 10B. Second conductive member 410 electrically connects third stack 10C and electrical apparatus 50.

Third conductive member 420 and fourth conductive member 430 are disposed near the other side wall 23 included in the pair of side walls 21. Third conductive member 420 bends and extends along the X direction. Fourth conductive member 430 extends in the X direction.

Third conductive member 420 electrically connects first stack 10A and electrical apparatus 50. Fourth conductive member 430 electrically connects second stack 10B and third stack 10C.

Electrical apparatus 50 is, for example, a junction box for electrically connecting stack 10 and an external device of battery pack 1. Electrical apparatus 50 is electrically connected to first stack 10A, second stack 10B, and third stack 10C. Electrical apparatus 50 is not limited to a junction box but may be a fourth stack in which a plurality of battery cells are arranged in the Y direction or may be a terminal or a terminal box for connecting battery pack 1 and the external device.

In the second direction (the X direction) orthogonal to the first direction (the Y direction), electrical apparatus 50, first stack 10A, second stack 10B, and third stack 10C are arranged in this order.

In battery pack 1 according to the present embodiment, current flows through electrical apparatus 50, third conductive member 420, first stack 10A, first conductive member 400, second stack 10B, fourth conductive member 430, third stack 10C, second conductive member 410, and electrical apparatus 50 in this order.

Fig. 3 is a perspective view illustrating a configuration of battery cell 100 according to Embodiment 1 of the present technology. As illustrated in Fig. 3, battery cell 100 according to the present embodiment includes an electrode terminal 110, a housing 120, and a gas discharge valve 130.

Electrode terminal 110 is formed on housing 120. Electrode terminal 110 includes a positive electrode terminal 111 and a negative electrode terminal 112. Positive electrode terminal 111 and negative electrode terminal 112 are arranged in the X direction.

Housing 120 is a container that accommodates an electrode assembly and an electrolyte solution, which are not illustrated. Housing 120 has a substantially rectangular parallelepiped shape. Housing 120 is made of aluminum, an aluminum alloy, iron, an iron alloy such as stainless steel, or the like.

Housing 120 includes a sealing plate 121, a bottom surface 122, a pair of long side walls 123, and a pair of short side walls 124.

Sealing plate 121 forms the upper surface of housing 120. Electrode terminal 110 is disposed on sealing plate 121. Bottom surface 122 is opposite to sealing plate 121 in the Z direction.

The pair of long side walls 123 and the pair of short side walls 124 form the side surface of housing 120. The pair of long side walls 123 and the pair of short side walls 124 are orthogonal to each of sealing plate 121 and bottom surface 122. The pair of long side walls 123 are opposite to each other in the Y direction with the electrode assembly interposed therebetween. The pair of short side walls 124 are opposite to each other in the X direction with the electrode assembly interposed therebetween. Each of the pair of long side walls 123 has a larger area than that of each of the pair of short side walls 124.

Gas discharge valve 130 is fractured when the pressure inside housing 120 becomes equal to or exceeds a predetermined value. Accordingly, the gas in housing 120 is discharged out of housing 120.

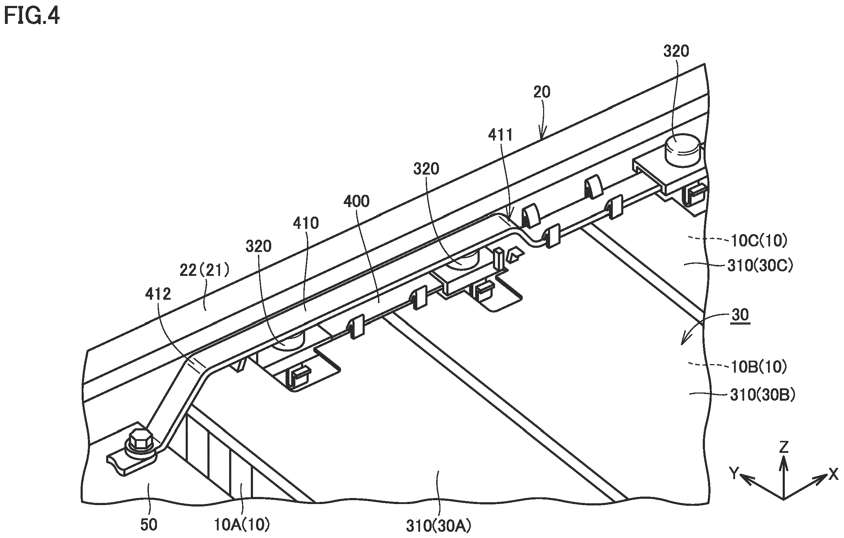

Fig. 4 is a perspective view illustrating a positional relation between first conductive member 400 and second conductive member 410. As illustrated in Fig. 4, second conductive member 410 includes a first bending portion 411 and a second bending portion 412.

First bending portion 411 is located on the third stack 10C side relative to the center of second conductive member 410 in the X direction. Second bending portion 412 is located on the electrical apparatus 50 side relative to the center of second conductive member 410 in the X direction.

Second conductive member 410 bends upward in the Z direction in first bending portion 411 from third stack 10C toward electrical apparatus 50. Further, second conductive member 410 bends downward in the Z direction in second bending portion 412 from third stack 10C toward electrical apparatus 50.

First conductive member 400 is disposed between first bending portion 411 and second bending portion 412 of second conductive member 410 in the X direction. Accordingly, first conductive member 400 and second conductive member 410 overlap each other in the third direction (the Z direction) orthogonal to the first direction (the Y direction) and the second direction (the X direction). In the present embodiment, first conductive member 400 is disposed below second conductive member 410 in the Z direction.

Second conductive member 410 gains a three-dimensional shape by including first bending portion 411 and second bending portion 412. A level difference in the Z direction may be caused by a positional difference in the Z direction between the respective upper surfaces of second busbar module 30B and third busbar module 30C and the upper surface of electrical apparatus 50. In this case, second conductive member 410 is easily adapted to the level difference by changing the bending angles of first bending portion 411 and second bending portion 412 as desired.

Second conductive member 410 is formed by, for example, stamping such as pressing. If the first conductive member and the second conductive member are disposed on an identical plane on stack 10, the second conductive member extends in a plurality of directions along an X-Y plane. The material other than the portion that constitutes the second conductive member when the second conductive member is formed is to be discarded. In contrast, second conductive member 410 according to the present embodiment is made of a straight material that extends in the X direction in a view in the Z direction. Thus, the portion of the material to be discarded at the time of forming second conductive member 410 is reduced. As a result, yield at the time of forming second conductive member 410 is enhanced.

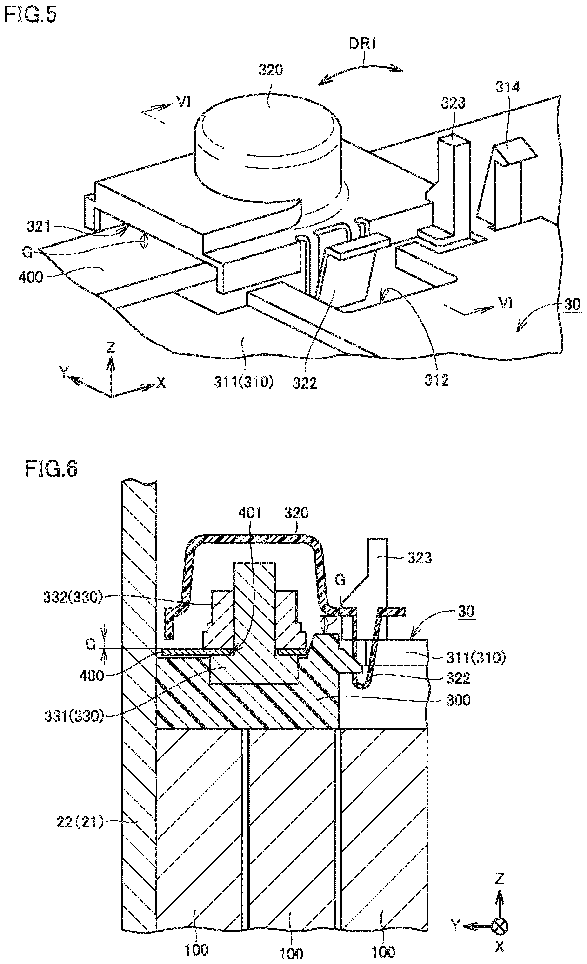

Fig. 5 is a perspective view illustrating a configuration of a cover portion 320 included in busbar module 30. Fig. 6 is a cross sectional view illustrating a configuration around cover portion 320 in Fig. 5, which is taken along the direction of a line with arrows VI-VI.

As illustrated in Figs. 4 to 6, busbar module 30 includes a plate member 300, a cover member 310, and a fastening member 330.

Plate member 300 is a plate-like member, which is provided on battery cell 100 and has electrical insulation properties. Fastening member 330, the inter-cell busbars, and the like are disposed over plate member 300.

Cover member 310 covers fastening member 330, the inter-cell busbars, and the like. Cover member 310 includes a main body portion 311, cover portion 320, and a holding mechanism. Main body portion 311 mainly covers the inter-cell busbars and the like.

Cover portion 320 covers at least part of first conductive member 400 and fastening member 330. Cover portion 320 is disposed on the inner side of an opening portion 312 provided in main body portion 311.

Cover portion 320 includes a depressed portion 321, an operation portion 322, and a hinge portion (not illustrated). First conductive member 400 is inserted through depressed portion 321. Operation portion 322 is provided opposite the one side wall 22 in relation to cover portion 320 in the Y direction. With operation portion 322, cover portion 320 can be opened and closed relative to main body portion 311. The hinge portion is located opposite first conductive member 400 in relation to fastening member 330 in the X direction. The hinge portion allows cover portion 320 to rotate (in a direction DR1 in Fig. 5) about an axis in the first direction when cover portion 320 is opened and closed.

The holding mechanism holds cover portion 320 in a state of being open relative to main body portion 311. The holding mechanism includes a protruding portion 323 and a claw portion 314. Protruding portion 323 is disposed on cover portion 320. Protruding portion 323 extends in one direction and is elastically deformable. Claw portion 314 is disposed on main body portion 311. Protruding portion 323 can engage with claw portion 314. Through elastic deformation of protruding portion 323 and engagement of protruding portion 323 and claw portion 314, cover portion 320 can be held in the state of being open relative to main body portion 311.

Fastening member 330 fastens first conductive member 400 to first stack 10A and second stack 10B. Fastening member 330 according to the present embodiment includes a bolt member 331 and a nut member 332. Bolt member 331 is inserted into a hole 401 of first conductive member 400. Bolt member 331 is screwed into nut member 332 in the state in which first conductive member 400 is disposed between bolt member 331 and nut member 332.

As illustrated in Fig. 4, second conductive member 410 and cover portion 320 overlap each other in the third direction (the Z direction). Cover portion 320 is located between fastening member 330 and second conductive member 410, and can thus prevent interference between fastening member 330 and second conductive member 410.

As illustrated in Figs. 5 and 6, a gap G is present inside cover portion 320 relative to at least part of first conductive member 400 and fastening member 330. Accordingly, cover portion 320 can move in the third direction (the Z direction) to an extent corresponding to gap G. Cover portion 320 can abut on second conductive member 410.

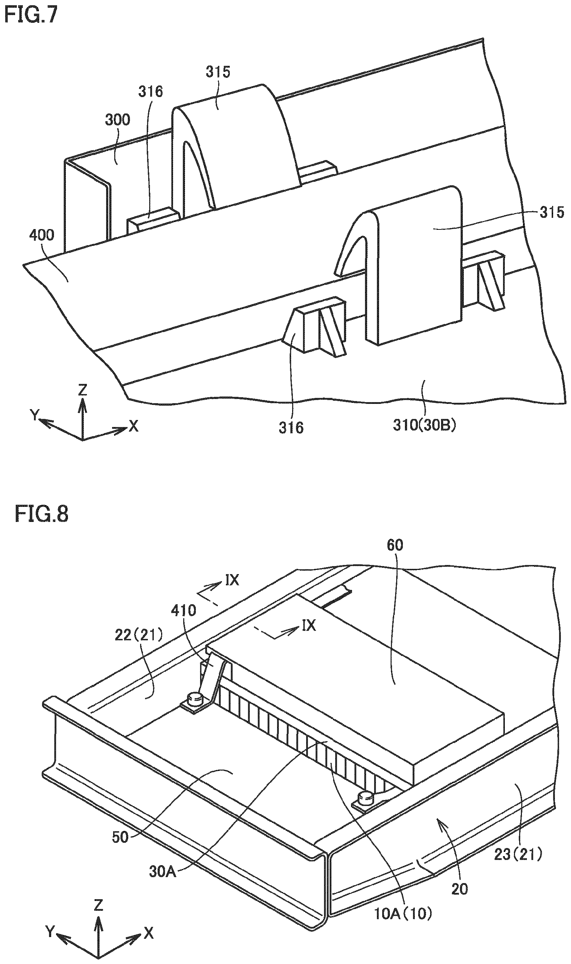

Fig. 7 is a perspective view illustrating a state in which first conductive member 400 is fixed by a fixing portion 315 provided on second busbar module 30B. Fig. 7 illustrates the state in which first conductive member 400 included in conductive member 40 is fixed.

As illustrated in Fig. 7, cover member 310 includes fixing portion 315. Fixing portion 315 can fix first conductive member 400 on second busbar module 30B.

Specifically, fixing portion 315 has a structure in which a pair of hooks face each other. First conductive member 400 is inserted between the pair of hooks. Respective ends of the pair of hooks elastically deform and the gap between the pair of hooks increases, and after the insertion of first conductive member 400, the pair of hooks return to their original positions from the elastic deformation. The respective ends of the pair of hooks abut on the upper surface of first conductive member 400. Accordingly, first conductive member 400 is fixed by fixing portion 315.

In the present embodiment, a guide member 316 is provided on both sides of fixing portion 315 in the X direction. Guide member 316 fixes first conductive member 400 in the direction orthogonal to the direction in which first conductive member 400 extends. Fixing portion 315 determines the position, in the Z direction, of first conductive member 400 and guide member 316 determines the position, in the Y direction, of first conductive member 400.

Conductive member 40 other than first conductive member 400, which includes second conductive member 410, can also be fixed by fixing portion 315 on busbar module 30. Fixing portion 315 may determine the respective positions, in both of the Z direction and the Y direction, of conductive member 40.

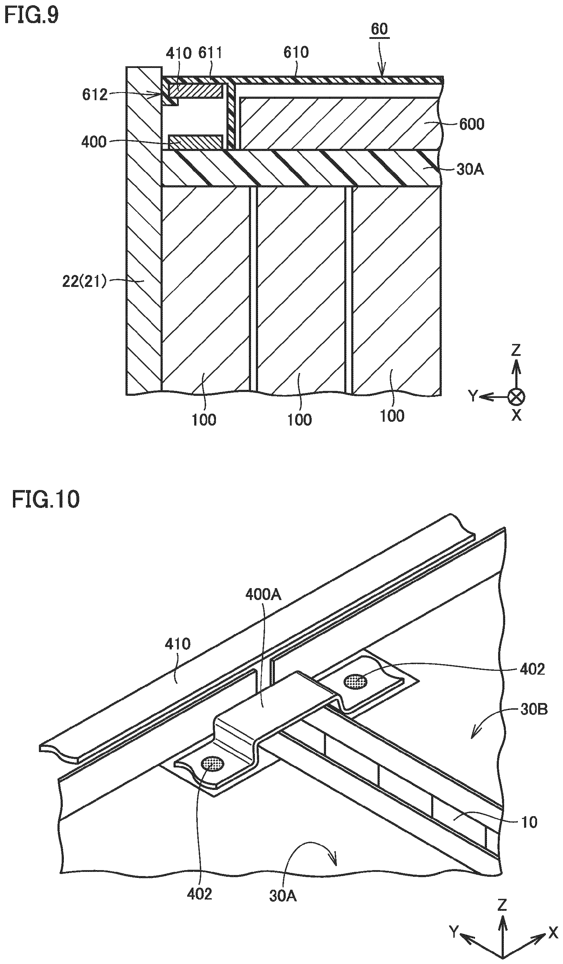

Fig. 8 is a perspective view illustrating a configuration of board member 60 included in battery pack 1 according to Embodiment 1 of the present technology. Fig. 9 is a cross sectional view illustrating a configuration near board member 60 in Fig. 8, which is taken along the direction of a line with arrows IX-IX.

As illustrated in Figs. 8 and 9, battery pack 1 according to the present embodiment further includes board member 60. Board member 60 senses the temperature of each of the plurality of battery cells 100, for example, and controls the current value and the like. Board member 60 includes a control board 600 and a board cover portion 610.

In the third direction (the Z direction), control board 600 is disposed at least over first stack 10A included in first stack 10A, second stack 10B, and third stack 10C. In the Z direction, control board 600 according to the present embodiment is disposed only over first stack 10A with first busbar module 30A interposed therebetween.

Board cover portion 610 has electrical insulation properties. Board cover portion 610 covers control board 600 in the third direction (the Z direction). Board cover portion 610 includes an extended-surface portion 611 and a folded portion 612.

Extended-surface portion 611 is a portion that is extended, on the one side wall 22 side in the Y direction, from an end portion of the upper surface of board cover portion 610 so as to cover second conductive member 410. Folded portion 612 is a portion that is folded at an end portion of extended-surface portion 611 in the Y direction so as to be positioned on the lower surface side of second conductive member 410 in the Z direction.

Extended-surface portion 611 and folded portion 612 support second conductive member 410. Accordingly, board cover portion 610 supports second conductive member 410. Board cover portion 610 having electrical insulation properties enables it to alleviate shaking of second conductive member 410 while ensuring electrical insulation.

In battery pack 1 according to Embodiment 1 of the present technology, first conductive member 400 and second conductive member 410 overlap each other in the third direction (the Z direction) and accordingly, the occupancy area of conductive member 40 above stack 10 in a view in the Z direction can be decreased in comparison with the case where the first conductive member and the second conductive member are disposed on an identical plane on stack 10. As a result, space for disposing a component other than conductive member 40 can be reserved above stack 10 and thus, the space inside battery pack 1 can be used effectively.

In battery pack 1 according to Embodiment 1 of the present technology, cover portion 320 is disposed between first conductive member 400 and second conductive member 410 and accordingly, interference between first conductive member 400 and second conductive member 410 can be inhibited.

In battery pack 1 according to Embodiment 1 of the present technology, upward and downward movements of cover portion 320 in the Z direction are enabled by gap G being present inside cover portion 320 relative to first conductive member 400 and fastening member 330. Accordingly, when second conductive member 410 shakes, cover portion 320 can absorb the shaking of second conductive member 410 by causing second conductive member 410 to abut on cover portion 320.

In battery pack 1 according to Embodiment 1 of the present technology, a structure resistant to shaking can be achieved by fixing conductive member 40 with fixing portion 315 of cover member 310 when first conductive member 400 and second conductive member 410 are disposed so as to overlap each other in the Z direction.

In battery pack 1 according to Embodiment 1 of the present technology, first conductive member 400 and second conductive member 410 are disposed so as to overlap each other in the Z direction while board cover portion 610 of board member 60 supports second conductive member 410, and even when second conductive member 410 shakes, the shaking of second conductive member 410 can be alleviated.

In battery pack 1 according to Embodiment 1 of the present technology, first conductive member 400 and second conductive member 410 are each provided so as to extend in the second direction (the X direction). Accordingly, the respective lengths of first conductive member 400 and second conductive member 410 can be reduced and an upper space inside battery pack 1 can be used more effectively in comparison with the case where first conductive member 400 and second conductive member 410 are each disposed so as to be inclined from the X direction.

### (Embodiment 2)

A battery pack 1 according to Embodiment 2 is described below. Battery pack 1 according to Embodiment 2 is different from battery pack 1 according to Embodiment 1 of the present technology in the connection structure between the first conductive member and the stack, and the same features as those of battery pack 1 according to Embodiment 1 of the present technology are not described repeatedly.

Fig. 10 is a perspective view illustrating a configuration of a first conductive member 400A included in battery pack 1 according to Embodiment 2 of the present technology.

As illustrated in Fig. 10, first conductive member 400A according to the present embodiment is connected to a stack 10 by welding.

Specifically, a through hole (not illustrated) is provided in first conductive member 400A. A joint portion 402 is formed by applying lasers to this through hole. Accordingly, an electrode terminal of a battery cell in stack 10 and first conductive member 400A are joined together.

Also in battery pack 1 according to Embodiment 2 of the present technology, first conductive member 400A and second conductive member 410 overlap each other in the third direction (the Z direction) and accordingly, the occupancy area of the conductive member above stack 10 in a view in the Z direction can be decreased in comparison with the case where the first conductive member and the second conductive member are disposed on an identical plane on stack 10. As a result, space for disposing a component other than the conductive member can be reserved above stack 10 and thus, the space inside the battery pack can be used effectively.

Although embodiments of the present invention have been described, it should be understood that the herein-disclosed embodiments are presented by way of illustration and example in every respect and are not to be taken by way of limitation. The scope of the present invention is defined by the claims and intended to include all changes within the purport and scope equivalent to the claims.

## Claims

1. A battery pack (1) comprising:
a first stack (10A) including a plurality of first battery cells (100) arranged in a first direction;
a second stack (10B) including a plurality of second battery cells (100) arranged in the first direction;
a third stack (10C) including a plurality of third battery cells (100) arranged in the first direction;
an electrical apparatus (50) electrically connected to the first stack (10A), the second stack (10B), and the third stack (10C);
a case (20) accommodating the first stack (10A), the second stack (10B), the third stack (10C), and the electrical apparatus (50);
a plate-like first conductive member (400) electrically connecting the first stack (10A) and the second stack (10B); and
a plate-like second conductive member (410) electrically connecting the third stack (10C) and the electrical apparatus (50), wherein
the case (20) includes a pair of side walls (21) supporting the first stack (10A), the second stack (10B), and the third stack (10C) from both sides in the first direction,
the electrical apparatus (50), the first stack (10A), the second stack (10B), and the third stack (10C) are arranged in this order in a second direction orthogonal to the first direction, and
the first conductive member (400) and the second conductive member (410) overlap each other in a third direction orthogonal to the first direction and the second direction.

2. The battery pack (1) according to claim 1, further comprising
a busbar module (30) disposed over the first stack (10A), the second stack (10B), and the third stack (10C), wherein
the busbar module (30) includes a fastening member (330) and a cover member (310), the fastening member (330) fastening the first conductive member (400) to the first stack (10A) and the second stack (10B), the cover member (310) including a cover portion (320) covering at least part of the first conductive member (400) and the fastening member (330), and
the second conductive member (410) and the cover portion (320) overlap each other in the third direction.

3. The battery pack (1) according to claim 2, wherein
a gap (G) is present inside the cover portion (320) relative to the at least part of the first conductive member (400) and the fastening member (330), and
the cover portion (320) is movable to an extent corresponding to the gap (G) and abuttable on the second conductive member (410) in the third direction.

4. The battery pack (1) according to claim 2 or 3, wherein
the cover member (310) includes a fixing portion (315) capable of fixing the first conductive member (400) and the second conductive member (410) over the busbar module (30).

5. The battery pack (1) according to any one of claims 1 to 4, further comprising:
a control board (600) disposed, in the third direction, at least over the first stack (10A) included in the first stack (10A), the second stack (10B), and the third stack (10C); and
a board cover portion (610) covering the control board (600) in the third direction, wherein
the board cover portion (610) supports the second conductive member (410).

6. The battery pack (1) according to any one of claims 1 to 5, wherein
the first conductive member (400) and the second conductive member (410) each extend in the second direction.
